# EUROPEAN PATENT SPECIFICATION

(11) **EP 4 507 100 B1**
(45) Date of publication and mention of the grant of the patent: **16.09.2026**
(21) Application number: 23891921.1
(22) Date of filing: 10.11.2023
(51) Int. Cl.: H01M 50/342, H01M 50/367, H01M 50/30

(54) **BI-DIRECTIONAL VENTING DEVICE AND SECONDARY BATTERY COMPRISING SAME**
BIDIREKTIONALE ENTLÜFTUNGSVORRICHTUNG UND SEKUNDÄRBATTERIE DAMIT
DISPOSITIF DE VENTILATION BIDIRECTIONNEL ET BATTERIE SECONDAIRE LE COMPRENANT

(30) Priority: 15.11.2022 KR 20220152444
(43) Date of publication of application: 12.02.2025
(60) Divisional application: 26198503.0
(73) Proprietor: LG Energy Solution, Ltd., Seoul 07335 (KR)
(72) Inventor: BOK, Cheon Hee, Daejeon 34122 (KR); SUNG, Joo Hwan, Daejeon 34122 (KR)
(74) Representative: Goddar, Heinz J.
(86) International application number: PCT/KR2023/018019
(87) International publication number: WO 2024/106854

(56) References cited:
- EP-A1- 2 362 461
- EP-A1- 4 087 045
- CN-U- 216 120 624
- KR-A- 20110 097 573
- KR-A- 20200 063 549
- KR-A- 20200 066 346
- KR-B1- 101 201 812
- US-A1- 2020 313 129
- US-A1- 2021 408 634

## Description

### [Technical Field]

The present invention relates to a bidirectional venting device and a secondary battery including the same, which improves safety by directing the discharge of dangerous factors such as high-temperature gases, sparks, heated particles, and the like from a secondary battery having experienced thermal runaway to the sides instead of the top.

This application claims the benefit of priority from Korean Patent Application No. 10-2022-0152444, filed Nov. 15, 2022.

### [Background Technology of the Invention]

Unlike primary batteries, secondary batteries can be recharged, and they have been heavily researched and developed in recent years due to their potential for miniaturization and large capacity. The demand for secondary batteries as an energy source is increasing rapidly due to the technological development and increasing demand for mobile devices, electric vehicles, and energy storage systems, which are emerging in response to the need for environmental protection.

Secondary batteries are categorized into coin-type batteries, cylindrical batteries, prismatic batteries, and pouch-type batteries based on the shape of the battery case. In a secondary battery, an electrode assembly mounted inside the battery case is a chargeable/dischargeable power generator consisting of a laminated structure of electrodes and separators.

Since secondary batteries are required to be used continuously for a long period of time, it is necessary to effectively control the heat generated during the charging and discharging process. If the secondary battery is not properly cooled, the increase in temperature will cause an increase in current, and the increase in current will cause another increase in temperature, resulting in a feedback chain reaction that will eventually lead to the catastrophic condition of thermal runaway.

When thermal runaway occurs in a secondary battery, the temperature and pressure rise together, and if the temperature and pressure rise to a level that exceeds the thermal and pressure performance of the secondary battery, the structure of the secondary battery will eventually collapse. When the structure of the secondary battery collapses, a large amount of air is supplied to the interior, causing a fire or explosion to grow uncontrollably and spread to the surrounding area, causing great damage.

To prevent this structural collapse, secondary batteries, especially cylindrical or prismatic batteries, are often equipped with a venting device. A venting device is a kind of safety valve that releases the pressure inside the secondary battery by rupturing when the pressure exceeds a certain level.

However, most current venting devices are designed to discharge dangerous factors such as high-temperature gases, sparks, heated particles, and the like directly upwards. When the secondary battery is used in an electric vehicle, these venting devices may cause safety problems by directing the dangerous factors toward the driver or passengers.

CN216120624U discloses an explosion-proof sheet, that includes a pressure release portion, a fixing portion surrounding the pressure release portion and a connecting portion located between the pressure release portion and the fixing portion. A thickness of a part of the connecting portion is greater than a thickness of the remaining part of the connecting portion.

EP 4 087 045 A1 discloses: Embodiments of this application provide a battery cell, a battery, an electrical device, a manufacturing method, and a manufacturing device. The battery cell includes: a shell, where the shell includes a wall; and a pressure relief mechanism, where the pressure relief mechanism is disposed on the wall, the pressure relief mechanism includes a body portion and a fragile portion connected to the body portion, the body portion is configured to connect to the wall, and the pressure relief mechanism is configured to break the fragile portion when an internal pressure or temperature of the battery cell reaches a threshold, so as to release the pressure. The pressure relief mechanism further includes a reinforcement portion disposed in the body portion in a thickness direction of the body portion. The reinforcement portion is configured to reduce deformation of the body portion. The battery cell according to this application aims to solve the problem of the battery cell bursting to relieve pressure in a case of no thermal runaway.

### [Description of the Invention]

### [Technical Problem]

The present invention aims to provide a venting device and a secondary battery including the same that improves safety by directing the discharge of dangerous factors such as high-temperature gases, sparks, heated particles, and the like ejected from a secondary battery having experienced thermal runaway to both sides instead of directly upwards.

However, the technical problems that the present invention seeks to address are not limited to those described above, and other problems not mentioned will be apparent to those of ordinary skill in the art from the following description of the invention.

### [Technical Solution]

The invention is set out in the appended claims. The present disclosure relates to a bidirectional venting device, which in one example includes: a rupture disk provided with a notch part that ruptures when a pressure exceeds a preset value; and a mounting part provided along the border of the rupture disk, wherein the notch part includes: a first notch part formed along a left half-surface corner of the rupture disk, and a second notch part formed along a right half-surface corner of the rupture disk, spaced apart so as not to connect with the first notch part.

The rupture disk ruptures so that the first and second notch parts form a butterfly shape upon application of a pressure exceeding a preset value.

The first and second notch parts, based on an imaginary line of symmetry passing through the center of which they are disposed separately from each other, increase in notch depth as the distance from the line of symmetry increases.

For example, the first and second notch parts may be shaped in such a way that the change in the notch depth is linear.

Moreover, the first and second notch parts may have a rate of change in the notch depth that is greater the farther away from the line of symmetry.

Alternatively, as another example, the first and second notch parts may be shaped in such a way that the change in the notch depth is discontinuous, forming a shape of a staircase.

Accordingly, the first and second notch parts may start rupture from the left and right corners where the notch depth is deep, in proportion to the magnitude of the pressure exceeding the preset value.

Meanwhile, the present disclosure provides a secondary battery including: a battery case provided with a space for storing an electrode assembly; and the bidirectional venting mounted on at least one side of the battery case.

The bidirectional venting device is airtightly mounted such that the first and second notch parts are externally exposed to the venting holes formed in the battery case.

The mounting part may be fixed by welding to the battery case while aligned with the venting holes.

Alternatively, the mounting part may be provided with a wall-shaped border that is inserted into the venting hole.

Also, in the mounting part may be provided with a support frame crossing the middle of which the first and second notch parts are separately disposed from each other.

### [Advantageous Effects]

According to the bidirectional venting device of the present disclosure having the above configuration, the notch part that ruptures when a pressure exceeding a set standard is applied are formed separately from each other along the left and right half-surface corners of the rupture disk, and accordingly, when the rupture disk ruptures, the first and second notch parts rupture to form a butterfly shape, so that dangerous factors such as high-temperature gases, sparks, heated particles, and the like are discharged to both sides of the venting device instead of directly upwards. As a result, the venting device can improve safety when applied to medium and large-sized secondary batteries for automobiles by discharging dangerous factors to the sides rather than directly upwards, which is towards the driver or passengers.

In addition, the bidirectional venting device of the present invention allows the notch depth of the notch part to be formed deeper and deeper toward the left and right corners of the rupture disk, so that in the early stages of thermal runaway generated inside the secondary battery, the notch part can be ruptured minimally to discharge only a small amount of ejecta in both side directions, thereby suppressing the promotion of combustion by air inflow while preventing the discharge to the direct upward direction as much as possible. In addition, in a situation where a thermal runaway progresses to a final state and a rapid pressure release is required, the entire notch part may be ruptured to secure a maximum discharge area. Thus, the bidirectional venting device of the present invention can greatly improve the safety of a secondary battery.

However, the technical effects of the present disclosure are not limited to those described above, and other effects not mentioned will be apparent to one of ordinary skill in the art from the following description.

### [Brief Description of the Diagrams]

The following diagrams, which accompany this specification, illustrate preferred embodiments of the disclosure and serve to further illustrate the technical ideas of the disclosure in conjunction with the detailed description.
FIG. 1 is a diagram illustrating one embodiment of a bidirectional venting device not part of the claimed invention.
FIG. 2 is a cross-sectional view of the incision along the "A-A" line in FIG. 1.
FIG. 3 is a diagram illustrating a bidirectional venting device with the first and second notch parts ruptured, respectively.
FIGS. 4 through 6 illustrate the structure of the first and second notch parts in a bidirectional venting device according to the present invention.
FIGS. 7 and 8 are diagrams illustrating different degrees of opening of the first and second notch parts.
FIG. 9 is a diagram illustrating an example of a bidirectional venting device of the present invention being mounted on a secondary battery.

### [Best Mode for Invention]

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present disclosure relates to a bidirectional venting device, which in one example includes a rupture disk having a notch part that ruptures when a pressure exceeding a preset value is applied, and a mounting part provided along a border of the rupture disk, wherein the notch part includes a first notch part formed along a left half-surface corner of the rupture disk, and a second notch part formed along a right half-surface corner of the rupture disk, spaced apart so as not to connect with the first notch part.

And, the rupture disk, upon application of a pressure exceeding a preset value, ruptures the first and second notch parts to form a butterfly shape.

According to the bidirectional venting device of the present disclosure with this configuration, the notch part that ruptures when a pressure exceeding the standard is applied is formed separately from each other along the left half and right half-surface corners of the rupture disk, so that when the rupture disk ruptures, the first and second notch parts rupture in a butterfly shape, so that dangerous factors such as high-temperature gases, flames, heated particles, and the like are discharged to both sides of the venting device instead of directly upwards.

As a result, the venting device of the present disclosure, when applied to medium to large-sized secondary batteries for automobiles, can improve safety by directing dangerous factors to the side rather than directly upwards, which is towards the driver or passengers.

### [Mode for Invention]

Hereinafter, with reference to the accompanying drawings, a specific embodiment of a bidirectional venting device 100 and a secondary battery 200 including the same will be described in detail. For reference, the directions of front, back, up, down, left and right designating relative positions used in the following description are intended to aid in the understanding of the disclosure, and refer to the directions shown in the diagrams unless otherwise defined.

### [First embodiment]

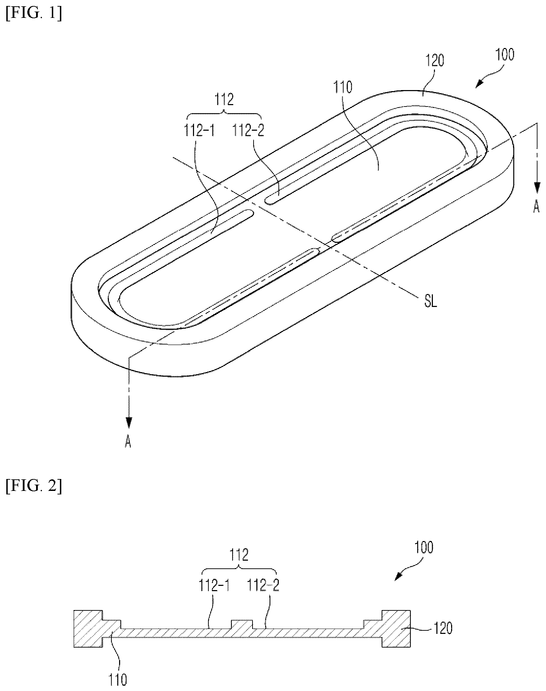

FIG. 1 is a diagram illustrating one embodiment of a bidirectional venting device 100 not part of the claimed invention, and FIG. 2 is a cross-sectional view through an incision along line "A-A" in FIG. 1.

The present disclosure illustrated is a bidirectional venting device 100 including a rupture disk 110 having a notch part 112 that ruptures when a pressure exceeding a preset value is applied, and a mounting part 120 provided along a border of the rupture disk 110.

The rupture disk 110 is a thin plate-like member made of metal with a notch-processed notch part 112 formed on its surface. The bidirectional venting device 100 is mounted on the secondary battery 200, and when the internal pressure of the sealed battery case 210 rises, the pressure causes tensile deformation across the thin rupture disk 110, which then tears off the weaker notch part 112 to relieve the internal pressure of the case 210.

The mounting part 120 is the border portion where the bidirectional venting device 100 is coupled to the case 210 of the secondary battery 200, and also serves to structurally support the rupture disk 110. The mounting part 120 can be shaped in a variety of ways, for example in the form of a plate thicker than the rupture disk 110, or in the form of a well with protruding side walls 122 surrounding the rupture disk 110.

Here, the bidirectional venting device 100 of the present disclosure includes a pair of notch parts 112-1, 112-2 where the notch parts 112 are independent of each other. Specifically, the notch part 112 of the present disclosure includes a first notch part 112-1 formed along a left half-surface corner of the rupture disk 110, and a second notch part 112-2 formed along a right half-surface corner of the rupture disk 110, spaced apart so as not to connect with the first notch part 112-1.

Referring to FIG. 2, the first and second notch parts 112-1, 112-2 are separated from each other relative to an imaginary line of symmetry SL that crosses approximately the center of the rupture disk 110. That is, the original thickness of the rupture disk 110 is maintained because there is no notching in the center region of the rupture disk 110 separating the first and second notch parts 112-1, 112-2, and the first and second notch parts 112-1, 112-2 are formed by performing notching in the form of lines along the left and right half-surface corners of the rupture disk 110, respectively. Since the thin first and second notch parts 112-1, 112-2 have a lower rupturing strength than other parts of the rupture disk 110, when a pressure exceeding a prescribed level is applied, a rupture occurs in the rupture disk 110 along the first and second notch parts 112-1, 112-2.

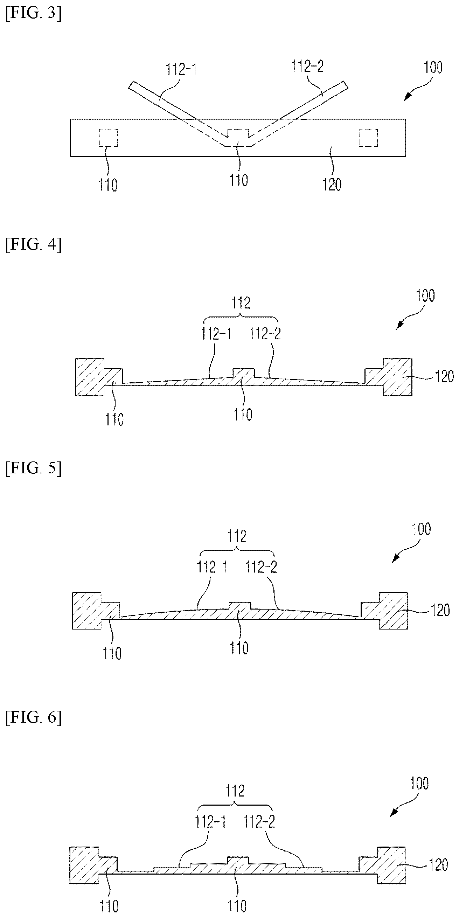

FIG. 3 is a diagram illustrating a bidirectional venting device 100 with the first and second notch parts 112-1, 112-2 ruptured, respectively. As shown, as rupture occurs along the first and second notch parts 112-1, 112-2 in the form of a U-shaped line, the first and second notch parts 112-1, 112-2 are lifted upward by pressure from the inside, with the center region of the rupture disk 110 separating the first and second notch parts 112-1, 112-2 as a support. In other words, when a pressure exceeding a preset value is applied to the bidirectional venting device 100, the rupture disk 110 ruptures in both left and right directions so that the first and second notch parts 112-1, 112-2 form a butterfly shape, and accordingly, gas or sparks ejected from the interior of the secondary battery 200 equipped with the bidirectional venting device 100 is discharged at an angle to the sides rather than directly upwards.

### [Second embodiment]

FIGS. 4 through 6 illustrate an embodiment of the bidirectional venting device 100 of the present invention, in particular, a cross-sectional view in an incised plane along the first and second notch parts 112-1, 112-2 as shown in FIG. 2.

In the second embodiment shown, the first and second notch parts 112-1, 112-2 are configured such that, relative to an imaginary line of symmetry SL through the center of the separately disposed ends of the rupture disk 110, the depth of the notches increases with distance from the line of symmetry SL), i.e., the notches are deepest at the left and right half ends of the rupture disk 110.

According to this second embodiment, when a pressure exceeding a preset value is applied to the rupture disk 110, the first and second notch parts 112-1, 112-2 begin to rupture from the left and right corners with deeper notches, in proportion to the magnitude of the applied pressure. That is, the deeper the notches, the lower the rupture strength, so that the left and right corners with deeper notches rupture first when a pressure exceeding the standard is applied.

Further, if the pressure acting on the rupture disk 110 is sufficient to rupture the thinnest left and right corners of the first and second notch parts 112-1, 112-2, but insufficient to rupture the thicker portions, the first and second notch parts 112-1, 112-2 may not rupture in their entirety, but only a portion of the left and right corners may rupture. In other words, the second embodiment is configured such that the first and second notch parts 112-1, 112-2 are capable of rupturing only a portion thereof, and the degree of opening of the first and second notch parts 112-1, 112-2 increases in proportion to the applied pressure.

According to such second embodiment, when the internal pressure gradually increases as the thermal runaway inside the secondary battery 200 equipped with the bidirectional venting device 100 progresses, the opening degree of the first and second notch parts 112-1, 112-2 gradually increases in response to the rising pressure level. Therefore, in the early stages of thermal runaway, the first and second notch parts 112-1, 112-2 are ruptured in a small manner so that only a small amount of ejecta can be discharged in both directions, thereby suppressing the promotion of combustion by air inflow while preventing the discharge to the direct upward direction as much as possible.

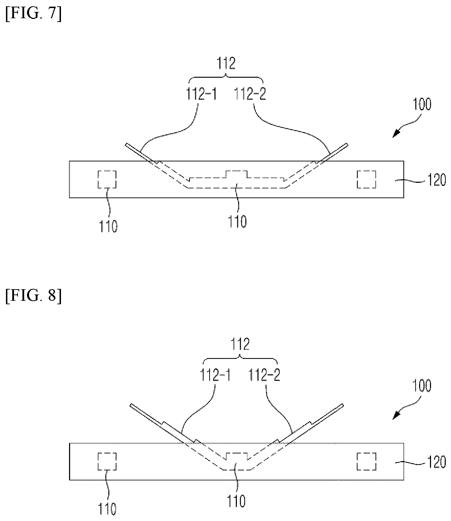

Furthermore, in situations where thermal runaway has progressed to a final state and rapid pressure discharge is required, the entire first and second notch parts 112-1, 112-2 can be ruptured to provide the maximum discharge area. FIGS. 7 and 8 exemplarily illustrate two states in which the degree of opening varies depending on the degree of rupture of the first and second notch parts 112-1, 112-2. The state in FIG. 8 is a case of greater openness than in FIG. 7, where the pressure acting on the rupture disk 110 is higher and the entire first and second notch parts 112-1, 112-2 are ruptured to achieve maximum openness.

Meanwhile, FIGS. 4 through 6 illustrate different modalities in which the thickness of the first and second notch parts 112-1, 112-2 tapers toward the left and right corners.

FIGS. 4 and 5 illustrate embodiments in which the change in notch depth for the first and second notch parts 112-1, 112-2 is linear in shape. In the embodiment of FIG. 4, relative to an imaginary line of symmetry SL through the center of the first and second notch parts 112-1, 112-2 being disposed separately from each other on the rupture disk 110, the notch depth deepens in a straight line of first order function as the distance from the line of symmetry SL increases. In contrast, in the embodiment of FIG. 5, the notch depth varies linearly, with the difference being that the rate of change of the notch depth is in the form of a curve that increases as the distance from the line of symmetry SL increases, rather than a straight line of the first order function.

The embodiment of FIG. 5 is intended to further ensure progressive rupture of the first and second notch parts 112-1, 112-2 in proportion to the internal pressure. As in FIG. 4, if the variation of the notch depth forms a straight line of a first order function, it is possible that the first and second notch parts 112-1, 112-2 will rupture more than desired by inertia when rupture is initiated. Therefore, FIG. 5 is an embodiment to effectively prevent such over-rupture, wherein the left and right corners of the first and second notch parts 112-1, 112-2 are easily ruptured at the beginning of the rupture, but as the rupture progresses toward the center, the thickness is rapidly increased to prevent over-rupture from occurring.

FIG. 6 is a configuration of the first and second notch parts 112-1, 112-2 to achieve the same effect as the embodiment of FIG. 5, wherein the change in notch depth is in the form of a discontinuous step. Since each step of discontinuously varying notch depth results in a discontinuous rupture strength, the likelihood of over-rupture is greatly reduced by the gradual rupture of the first and second notch parts 112-1, 112-2 in response to an increase in pressure.

### [Third embodiment]

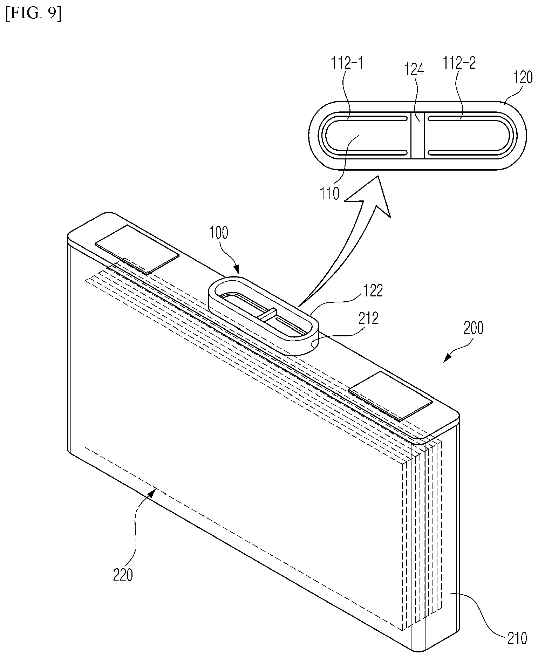

FIG. 9 is a diagram illustrating an example of the bidirectional venting device 100 of the present invention being mounted to a secondary battery 200. The secondary battery 200 includes a battery case 210 having a space for storing an electrode assembly 220, and at least one bidirectional venting device 100 may be mounted on at least one side (top side in the diagram) of the battery case 210.

The bidirectional venting device 100 is airtightly mounted such that the first and second notch parts 112-1, 112-2 are externally exposed with respect to the venting hole 212 formed in the battery case 210. That is, the first and second notch parts 112-1, 112-2 are exposed in their entirety for observation from the outside such that there is no obstruction or interference with the first and second notch parts 112-1, 112-2 rupturing to form a butterfly shape as shown in FIG. 3.

And, the mounting part 120 for fixing the bidirectional venting device to the battery case 210 may be welded to the battery case 210 in alignment with the venting holes 212 formed through the battery case 210. Alternatively, in the embodiment shown in FIG. 9, the mounting part 120 protrudes in the form of a well to form a border in the form of a wall 122 against the rupture disk 110, with which the side wall 122 of the mounting part 120 can be inserted into the venting holes 212 to be coupled. Of course, it is also possible for the side wall 122 of the mounting part 120 to be welded about the venting holes 212 to increase the fixing strength.

And, as shown in the partially enlarged view of FIG. 9, the mounting part 120 may include a support frame 124 spanning the center where the first and second notch parts 112-1, 112-2 are separately disposed from each other. The support frame 124 reliably prevents the rupture of each of the first notch part 112-1 and the second notch part 112-2 from affecting each other, thereby making it more certain that the ruptured first and second notch parts 112-1, 112-2 will form a butterfly shape so that high-temperature gases, dust, and the like can be discharged in both side directions.

### [Reference numerals]

| | | | |
|---|---|---|---|
| 100: | BIDIRECTIONAL VENTING DEVICE | 110: | RUPTURE DISK |
| 112: | NOTCH PART | 112-1: | FIRST NOTCH PART |
| 112-2: | SECOND NOTCH PART | 120: | MOUNTING PART |
| 122: | SIDE WALL | 124: | SUPPORT FRAME |
| 200: | SECONDARY BATTERY | 210: | BATTERY CASE |
| 212: | VENTING HOLE | 220: | ELECTRODE ASSEMBLY |
| SL: | LINE OF SYMMETRY | | |

## Claims

1. A bidirectional venting device (100), comprising:
a rupture disk (110) having a notch part (112) that is configured to rupture when a pressure exceeds a preset value; and
a mounting part (120) extending along a border of the rupture disk (110),
wherein the notch part (112) comprises a first notch part (112-1) formed along a left half-surface corner of the rupture disk (110), and a second notch part (112-2) formed along a right half-surface corner of the rupture disk (110), the second notch part (112-2) spaced apart from the first notch part (112-1), and
**characterized in that**
the first and second notch parts (112-1, 112-2) each increase in notch depth as a distance from a line of symmetry extending between the first and second notch parts (112-1, 112-2) increases.

2. The bidirectional venting device (100) of claim 1, wherein the rupture disk (110) is configured to rupture so that the first and second notch parts (112-1, 112-2) form a butterfly shape upon application of the pressure that exceeds the preset value.

3. The bidirectional venting device (100) of claim 1, wherein the first and second notch parts (112-1, 112-2) are shaped such that the increase in the notch depth is linear.

4. The bidirectional venting device (100) of claim 3, wherein the first and second notch parts (112-1, 112-2) each have a rate of change of the notch depth that is greater as the distance from the line of symmetry increases.

5. The bidirectional venting device (100) of claim 1, wherein the first and second notch parts (112-1, 112-2) are shaped such that the increase in the notch depth is discontinuous, the notch depth of each of the first and second notch parts (112-1, 112-2) forming a shape of a staircase.

6. The bidirectional venting device (100) of claim 1, wherein the first and second notch parts (112-1, 112-2) are configured to rupture starting from the left and right half-surface corners where the notch depth is greatest, a degree of rupture being in proportion to a magnitude of the pressure exceeding the preset value.

7. A secondary battery (200) comprising:
a battery case (210) having a space therein configured to receive storage of an electrode assembly; and
the bidirectional venting device (100) according to claim 1, wherein the bidirectional venting device (100) is mounted on at least one side of the battery case (210).

8. The secondary battery (200) of claim 7, wherein the bidirectional venting device (100) is airtightly mounted such that the first and second notch parts (112-1, 112-2) are externally exposed to venting holes (212) formed in the battery case (210).

9. The secondary battery (200) of claim 8, wherein the mounting part (120) is fixed by welding to the battery case (210) and is aligned with the venting holes (212).

10. The secondary battery (200) of claim 8, wherein the mounting part (120) has a wall-shaped border that extends into the venting holes (212).

11. The secondary battery (200) of claim 10, wherein the mounting part (120) has a support frame (124) crossing a middle of the battery case (210) that is located between the first and second notch parts (112-1, 112-2).

## Patentansprüche

1. Bidirektionale Entlüftungsvorrichtung (100), umfassend:
eine Berstscheibe (110) mit einem Kerbenteil (112), der konfiguriert ist, um zu bersten, wenn ein Druck einen voreingestellten Wert überschreitet; und
ein Befestigungsteil (120), das sich entlang einem Rand der Berstscheibe (110) erstreckt,
wobei das Kerbenteil (112) ein erstes Kerbenteil (112-1), das entlang einer linken Halbflächenecke der Berstscheibe (110) ausgebildet ist, und ein zweites Kerbenteil (112-2), das entlang einer rechten Halbflächenecke der Berstscheibe (110) ausgebildet ist, umfasst, wobei das zweite Kerbenteil (112-2) von dem ersten Kerbenteil (112-1) beabstandet ist, und
**dadurch gekennzeichnet, dass**
das erste und das zweite Kerbenteil (112-1, 112-2) jeweils mit einem Abstand von einer Symmetrielinie, die sich zwischen dem ersten und dem zweiten Kerbenteil (112-1, 112-2) erstreckt, in der Kerbentiefe zunimmt.

2. Bidirektionale Entlüftungsvorrichtung (100) nach Anspruch 1, wobei die Berstscheibe (110) konfiguriert ist, um zu bersten, sodass das erste und das zweite Kerbenteil (112-1, 112-2) bei Anlegen des Drucks, der den voreingestellten Wert überschreitet, eine Schmetterlingsform bilden.

3. Bidirektionale Entlüftungsvorrichtung (100) nach Anspruch 1, wobei das erste und das zweite Kerbenteil (112-1, 112-2) derart geformt sind, dass die Zunahme der Kerbentiefe linear ist.

4. Bidirektionale Entlüftungsvorrichtung (100) nach Anspruch 3, wobei das erste und das zweite Kerbenteil (112-1, 112-2) jeweils eine Änderungsrate der Kerbentiefe aufweisen, die mit zunehmendem Abstand von der Symmetrielinie größer ist.

5. Bidirektionale Entlüftungsvorrichtung (100) nach Anspruch 1, wobei das erste und das zweite Kerbenteil (112-1, 112-2) derart geformt sind, dass die Zunahme der Kerbentiefe diskontinuierlich ist, wobei die Kerbentiefe von jedem des ersten und des zweiten Kerbenteils (112-1, 112-2) eine Form einer Treppe bildet.

6. Bidirektionale Entlüftungsvorrichtung (100) nach Anspruch 1, wobei das erste und das zweite Kerbenteil (112-1, 112-2) konfiguriert sind, um beginnend von der linken und der rechten Halbflächenecke, wo die Kerbentiefe am größten ist, zu bersten, wobei ein Grad des Bersten proportional zu einer Größe des Drucks ist, der den voreingestellten Wert überschreitet.

7. Sekundärbatterie (200), umfassend:
ein Batteriegehäuse (210) mit einem Raum darin, der konfiguriert ist, um eine Aufbewahrung einer Elektrodenanordnung aufzunehmen; und
die bidirektionale Entlüftungsvorrichtung (100) nach Anspruch 1, wobei die bidirektionale Entlüftungsvorrichtung (100) auf mindestens einer Seite des Batteriegehäuses (210) montiert ist.

8. Sekundärbatterie (200) nach Anspruch 7, wobei die bidirektionale Entlüftungsvorrichtung (100) luftdicht montiert ist, sodass das erste und das zweite Kerbenteil (112-1, 112-2) außerhalb von Entlüftungslöchern (212), die in dem Batteriegehäuse (210) gebildet sind, freiliegen.

9. Sekundärbatterie (200) nach Anspruch 8, wobei das Montageteil (120) durch Schweißen an dem Batteriegehäuse (210) befestigt ist und mit den Entlüftungslöchern (212) ausgerichtet ist.

10. Sekundärbatterie (200) nach Anspruch 8, wobei das Montageteil (120) einen wandförmigen Rand aufweist, der sich in die Entlüftungslöcher (212) erstreckt.

11. Sekundärbatterie (200) nach Anspruch 10, wobei das Montageteil (120) einen Stützrahmen (124) aufweist, der eine Mitte des Batteriegehäuses (210) kreuzt, die sich zwischen dem ersten und dem zweiten Kerbenteil (112-1, 112-2) befindet.

## Revendications

1. Dispositif de ventilation bidirectionnel (100), comprenant :
un disque de rupture (110) possédant un élément à encoche (112) configuré pour se rompre lorsqu'une pression dépasse une valeur prédéfinie ; et
une pièce de montage (120) s'étendant le long d'un bord du disque de rupture (110),
l'élément à encoche (112) comprenant un premier élément à encoche (112-1) formé le long d'un coin de la demi-surface gauche du disque de rupture (110), et un deuxième élément à encoche (112-2) formé le long d'un coin de la demi-surface droite du disque de rupture (110), le deuxième élément à encoche (112-2) étant espacé du premier élément à encoche (112-1), et
**caractérisé en ce que**
la profondeur de l'encoche de chacun des premier et deuxième éléments à encoche (112-1, 112-2) augmente au fur et à mesure qu'une distance depuis une ligne de symétrie s'étendant entre les premier et deuxième éléments à encoche (112-1, 112-2) augmente.

2. Dispositif de ventilation bidirectionnel (100) selon la revendication 1, le disque de rupture (110) étant configuré pour se rompre de sorte que les premier et deuxième éléments à encoche (112-1, 112-2) prennent la forme d'un papillon lors de l'application de la pression dépassant la valeur prédéfinie.

3. Dispositif de ventilation bidirectionnel (100) selon la revendication 1, les premier et deuxième éléments à encoche (112-1, 112-2) étant façonnés de sorte que l'augmentation de la profondeur de l'encoche soit linéaire.

4. Dispositif de ventilation bidirectionnel (100) selon la revendication 3, les premier et deuxième éléments à encoche (112-1, 112-2) présentant chacun un taux de variation de la profondeur d'encoche qui augmente au fur et à mesure de l'augmentation de la distance depuis la ligne de symétrie.

5. Dispositif de ventilation bidirectionnel (100) selon la revendication 1, les premier et deuxième éléments à encoche (112-1, 112-2) étant façonnés de sorte que l'augmentation de la profondeur d'encoche soit discontinue, la profondeur d'encoche de chacun des premier et deuxième éléments à encoche (112-1, 112-2) étant en forme d'escalier.

6. Dispositif de ventilation bidirectionnel (100) selon la revendication 1, les premier et deuxième éléments à encoche (112-1, 112-2) étant configurés pour se rompre en partant des coins des demi-surfaces gauche et droite présentant une profondeur d'encoche majeure, un degré de rupture étant proportionnel à une magnitude de la pression dépassant la valeur prédéfinie.

7. Batterie secondaire (200) comprenant:
un boîtier de batterie (210) possédant un espace configuré pour recevoir le stockage d'un ensemble d'électrodes ; et
le dispositif de ventilation bidirectionnel (100) selon la revendication 1, le dispositif de ventilation bidirectionnel (100) étant monté sur au moins un côté du boîtier de batterie (210).

8. Batterie secondaire (200) selon la revendication 7, le dispositif de ventilation bidirectionnel (100) étant monté hermétiquement de sorte que les premier et deuxième éléments à encoche (112-1, 112-2) soient exposés extérieurement aux orifices de ventilation (212) formés dans le boîtier de batterie (210).

9. Batterie secondaire (200) selon la revendication 8, la pièce de montage (120) étant fixée par soudage au boîtier de la batterie (210), et étant alignée avec les orifices de ventilation (212).

10. Batterie secondaire (200) selon la revendication 8, la pièce de montage (120) possédant une bordure en forme de mur s'étendant dans les orifices de ventilation (212).

11. Batterie secondaire (200) selon la revendication 10, la pièce de montage (120) possédant un cadre de support (124) traversant un centre du boîtier de batterie (210) situé entre les premier et deuxième éléments à encoche (112-1, 112-2).
